# EUROPÄISCHE PATENTSCHRIFT

(11) **EP 3 002 153 B1**
(45) Veröffentlichungstag und Bekanntmachung des Hinweises auf die Patenterteilung: **05.12.2018**
(21) Anmeldenummer: 15185614.3
(22) Anmeldetag: 17.09.2015
(51) Int. Cl.: B60N 2/60

(54) **FAHRZEUGSITZ MIT EINEM CRASHMODIFIZIERTEN BLENDENHALTER**
VEHICLE SEAT WITH A COVER HOLDER MODIFIED FOR CRASH
SIEGE DE VEHICULE DOTE D'UN SUPPORT DE FLASQUE MODIFIE POUR LES CAS D'ACCIDENT

(30) Priorität: 01.10.2014 DE 102014219978
(43) Veröffentlichungstag der Anmeldung: 06.04.2016
(73) Patentinhaber: Sitech Sitztechnik GmbH, 38442 Wolfsburg (DE)
(72) Erfinder: Maciej, Steffen, 39114 Magdeburg (DE); Bratge, Jens, 39343 Ingersleben OT Alleringersleben (DE)
(74) Vertreter: Wöhltjen, Karsten

(56) Entgegenhaltungen:
- DE-A1-102004 043 433
- DE-T2- 69 600 668
- FR-A1- 2 837 158
- US-A- 5 080 440
- US-A1- 2012 313 408

## Beschreibung

Die Erfindung betrifft einen Fahrzeugsitz mit einem Blendenhalter.

Aus dem Stand der Technik, insbesondere aus den Druckschriften DE 696 00 668 T2, FR 2 837 158 A1 und DE 10 2004 043433 A1 ist es bekannt, Abdeckungen oder Blenden vorzusehen, die mittels Befestigungselementen an einer Struktur oder an einem Sitzversteller befestigt werden.

Solche Befestigungselemente werden auch als Sitzblendenhalter bezeichnet. Diese Sitzblendenhalter sind meist kompliziert geformte Drahtrahmen, die einerseits mit der Sitzstruktur eines Fahrzeugsitzes und andererseits mit der Blende verbunden sind.

Es hat sich herausgestellt, dass die Blende in dem Bereich an dem ein Sicherheitsgurt an der Blende anliegt, insbesondere im Crashfall mit Kräften beaufschlagt wird. Diese Crashkräfte gefährden insbesondere im Bereich des an der Blende anliegenden Sicherheitsgurtes, insbesondere des Beckengurtabschnitt des Sicherheitsgurtes die Strukturstabilität der Blende. Die Blende weist somit im Wirkbereich der auf die Blende einwirkenden Kräfte einen kritischen Bereich auf, der im Crashfall, insbesondere im Frontalcrashfall besonders hohen Belastungen unterliegt.

Der Erfindung liegt die Aufgabe zugrunde, eine Blende für einen Fahrzeugsitz zu schaffen, die hinsichtlich ihrer Strukturstabilität optimiert ist.

Bekannt sind Blenden, deren Struktur hinsichtlich ihrer Stabilität in durch Krafteinwirkung gefährdeten kritischen Bereichen auf ihrer Innenseite mit aus expandierenden Polypropylen-Einlegern verstärkt und damit stabilisiert sind. Die Einleger werden verklebt oder anderweitig an der Blende befestigt.

Ausgangspunkt der Erfindung ist ein Blendenhalter aus mindestens einem Draht, der mindestens ein Element zur Befestigung des Blendenhalters an einer an den Blendenhalter angrenzenden festen Struktur und mindestens ein Element zur Befestigung des Blendenhalters an einer Blende aufweist.

Der Draht bildet einen Stützbügel aus, der im Zusammenbauzustand von Blendenhalter und Blende in einem kritischen Bereich der Blende angeordnet ist, in dem in einem etwaigen Crashfall eine hohe Crashkraft auf die Blende einwirkt.

Erfindungsgemäß ist vorgesehen, dass der kritische Bereich der Blende eine in die Blende integrierte Öffnung aufweist, aus der im Einbauzustand der Blende ein Höhenverstellhebel heraus steht, für dessen Mechanik in der Blende ein Bauraum vorgehalten ist.

In vorteilhafter Weise kann durch den im kritischen Bereich angeordneten Stützbügel eine von außen auf die Blende wirkende Kraft einwirken, ohne dass die Gefahr besteht, dass der Blendenhalter seine Form beziehungsweise Materialstabilität verliert. Die im kritischen Bereich ohne Stützbügel mit einem Blendenhalter versehene Blende ist beim Einwirken von hohen Kräften leicht verformbar. Ist ein Blendenhalter mit Stützbügel angeordnet, ist die Blende im kritischen Bereich derart stabilisiert, dass bereits eine Verformung nahezu ausgeschlossen ist. Auf jeden Fall wird im kritischen Bereich eine Materialzerstörung sicher vermieden.

In dem in der Beschreibung näher definierten kritischen Bereich greift im Crashfall ein Beckengurtabschnitt eines Sicherheitsgurtes an. Dieser Beckengurtabschnitt des Sicherheitsgurtes wirkt mit seiner Innenseite flächig auf die Blende und damit auf den Blendenhalter. In vorteilhafter Weise sorgt der Blendenhalter an sich und der in den Blendenhalter integrierte Stützbügel sicher dafür, dass im Bereich in dem der Beckengurtabschnitt des Sicherheitsgurtes mit der Blende in Berührung kommt (kritischer Bereich), keine Destabilisierung der Blende erfolgt.

In bevorzugter Ausgestaltung der Erfindung ist vorgesehen, dass der Draht des Blendenhalters zu einem Drahtrahmen geformt ist, der mindestens einen Schenkel umfasst, wobei der mindestens eine Schenkel im Zusammenbauzustand von Blendenhalter und Blende nahe des kritischen Bereiches der Blende angeordnet ist, oder zumindest teilweise in den kritischen Bereich der Blende hineinragt, wobei an dem mindestens einen Schenkel der Stützbügel angeformt oder angeordnet ist, der von dem mindestens einen Schenkel abgeht und im Zusammenbauzustand in einem zentralen Bereich des kritischen Bereiches angeordnet ist. In vorteilhafter Weise wird ein Drahtrahmen gebildet, an dem der Stützbügel einfach in der gewünschten Lage relativ zur Blende an dem Blendenhalter anbringbar oder anformbar ist.

In bevorzugter Ausgestaltung der Erfindung ist vorgesehen, dass der Stützbügel mindestens ein Bügelelement umfasst, welches einerseits die Blende abstützt und eine Crashkraft im kritischen Bereich aufnimmt, und andererseits die Blende an der angrenzenden Struktur abstützt, so dass die Crashkraft in die angrenzende Struktur eingeleitet wird. In vorteilhafter Weise umfasst der Stützbügel eine Doppelfunktion. Er nimmt nicht nur die Crashkraft auf und leitet sie weiter, sondern er stützt sich selber an der angrenzende Struktur ab, so dass eine optimale Krafteinleitung in den Blendenhalter und in die Struktur bewirkbar ist.

Es wird erreicht, dass das mindestens eine Bügelelement des Stützbügels die Crashkraft über den mindestens einen Schenkel indirekt in die angrenzende Struktur einleitet, da der mindestens eine Schenkel ein Halteelement aufweist, welches im Einbauzustand des mit der Blende verbundenen Blendenhalters fest mit der Struktur verbunden ist. Diese Wirkung wird auch erreicht, ohne dass das mindestens eine Bügelelement die Crashkraft direkt in die angrenzende Struktur einleitet.

Er wird ferner erreicht, dass das mindestens ein Bügelelement des Stützbügels die Crashkraft direkt in die angrenzende Struktur einleitet, da sich das mindestens eine Bügelelement im Einbauzustand des mit der Blende verbundenen Blendenhalters einerseits an einer Innenseite der Blende und andererseits direkt an der angrenzenden Struktur abstützt. Diese Wirkung wird auch erreicht ohne, dass das mindestens eine Bügelelement die Crashkraft indirekt in die angrenzende Struktur einleitet.

Bevorzugt ist eine Kombination aus indirekter und direkter Krafteinleitung in die angrenzende Struktur gemäß dem ausführlich erläuterten und in den Figuren dargestellten Ausführungsbeispiel.

Bevorzugt ist, dass der Stützbügel u-förmig ausgebildet ist, wobei zwei Bügelelemente des "U" quer zur Längsachse, des sich im Zusammenbauzustand von Blendenhalter und Blende befindenden Blendenhalters angeordnet sind, und ein die zwei Bügelelemente verbindendes Bügelelement in Richtung der Längsachse, des sich im Zusammenbauzustand von Blendenhalter und Blende befindenden Blendenhalters angeordnet ist.

Bevorzugt ist ferner, dass die Bügelelemente über ein weiteres Bügelelement an den mindestens einen Schenkel angeformt oder angeordnet sind.

Die Blende ist bevorzugt als Kunststoffteil, insbesondere als Spritzgussteil ausgebildet und hergestellt. Der Aufbau der Blende und des Blendenhalters sowie der Stützbügel des Blendenhalters sind im nachfolgenden Ausführungsbeispiel detailliert beschrieben.

Eine mögliche Ausführung der Erfindung wird nachfolgend in einem Ausführungsbeispiel erläutert. Für die Zwecke der Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Es zeigen:
- Figur 1: eine Seitenansicht auf einen Fahrzeugsitz mit einer Blende im Einbauzustand;
- Figur 2: eine vergrößerte Seitenansicht auf die Außenseite der Blende in einer Einzeldarstellung;
- Figur 3: eine vergrößerte Seitenansicht auf die Außenseite der Blende im Einbauzustand der Blende an dem Fahrzeugsitz;
- Figur 4: eine Innenansicht der Blende mit dem Blendenhalter im Zusammenbauzustand;
- Figur 5: eine Außenansicht der Blende mit dem Blendenhalter im Zusammenbauzustand (Blende transparent dargestellt);
- Figur 6: eine Ansicht nur auf den Blendenhalter in der Lage gemäß Figur 5.

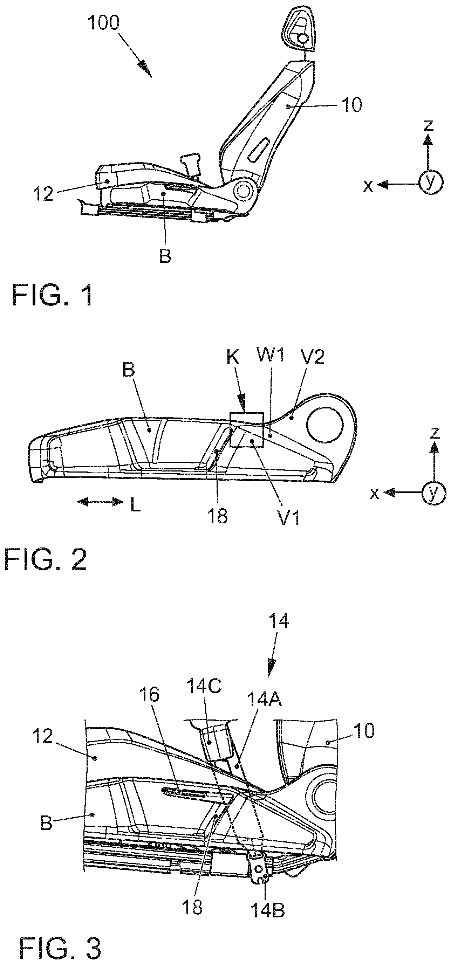

Die Seitenansicht der Figur 1 zeigt einen Fahrzeugsitz 100 mit einer Rückenlehne 10 und einem Sitzteil 12 und einer Blende B. Die Blende B ist in Längsrichtung der Blende B gesehen, in x-Richtung (Fahrtrichtung) verlaufend, seitlich an einer nicht näher dargestellten angrenzenden Struktur des Sitzteiles 12 angeordnet. Gezeigt ist somit eine an dem Sitzteil 12 angeordnete linke Blende B im Einbauzustand, die sich mit einem Blendenhalter H im Zusammenbauzustand befindet. Der Blendenhalter H ist im Zusammenbauzustand in die Blende B integriert.

Die Figuren 2 und 3 zeigen in einer Zusammenschau die Blende B in vergrößerten Darstellungen, wodurch weitere Details hinsichtlich des Aufbaus der Blende B und in Bezug auf die Struktur der Blende B im Beckengurtbereich 14A des Sicherheitsgurtes 14 verdeutlicht werden. Zudem wird ein durch die im Crashfall auf die Blende B einwirkende Kraft ein kritischer Bereich K (siehe die rechteckige Umrandung in Figur 2) der Blende B gezeigt, in dem die Blende B und der Blendenhalter H, insbesondere im Frontalcrashfall im Einbauzustand besonders hohen Belastungen unterliegt.

Die Blende B weist eine in y-Richtung ausgebildete Vertiefung auf, in die in x-Richtung ein Höhenverstellhebel 16 des Fahrzeugsitzes 100 aus einer in die Blende B integrierten schlitzartigen Öffnung 18 heraus steht. Die Öffnung 18 weist entsprechend in x-Richtung.

Innerhalb der Blende B liegt eine Mechanik des Höhenverstellhebels 16, für die in der Blende B ein entsprechender Bauraum vorgehalten ist.

Im kritischen Bereich K weist die Blende B einen im Wesentlichen ersten vertikalen Wandbereich V1 in der x/z-Ebene liegend auf, der in einen im Wesentlichen horizontalen Wandbereich W1 übergeht, der im Wesentlichen gegenüber einer gedachten x/y-Ebene leicht schräg nach hinten abfallend verläuft.

Der im Wesentlichen horizontale Wandbereich W1 geht in einen im Wesentlichen flanschartigen zweiten vertikalen Wandbereich V2 über, der analog zum ersten vertikalen Wandbereich V1 in der x/z-Ebene liegend angeordnet ist. Hier ist eine Öffnung für einen Beschlag des Fahrzeugsitzes 100 ausgebildet, der im Einbauzustand der Blende B die flanschseitige Öffnung der Blende B durchgreift.

Wie insbesondere Figur 3 zeigt, läuft der Beckengurtabschnitt 14A des Sicherheitsgurtes 14 in der normalen Gebrauchsposition des Beckengurtabschnittes 14A personenabhängig, im Einbauzustand der Blende B im Wesentlichen entlang der Seitenfläche der Blende B in Richtung der Oberseite der Öffnung 18 des Höhenverstellers 16 zum Becken einer aufsitzenden Person.

Der Beckengurtabschnitt 14A umfasst ein Befestigungselement 14B mit dem der Beckengurtabschnitt 14A an der B-Säule im unteren Bereich der B-Säule karosseriefest angebracht ist. Auf der gegenüberliegenden Seite ist das karosseriefeste Gurtschloss 14C zum Schließen des Sicherheitsgurtes 14 dargestellt.

In einem Crashfall kommt der Beckengurtabschnitt 14A des geschlossenen Sicherheitsgurtes 14 mit dem ersten vertikalen Wandbereich V1 flächig in Berührung und es kommt zu einem direkten Krafteintrag in den ersten vertikalen Wandbereich V1 mit einer Kraftweiterleitung innerhalb der Blende B in den horizontalen Wandbereich W1 und den zweiten vertikalen Wandbereich V2.

Der Beckengurtabschnitt 14A liegt außerdem zumindest teilweise an dem im Wesentlichen horizontalen Wandbereich W1 nahe der Oberseite der Öffnung 18 an, wodurch es auch in diesem Bereich W1 zu einem direkten Krafteintrag in die Blende B kommt.

Gegebenenfalls kommt es noch dazu, dass der Beckengurtabschnitt 14A auch auf den im Wesentlichen zweiten vertikalen Wandbereich V2 einwirkt, wodurch es auch in diesem Bereich V2 zu einem direkten Krafteintrag in die Blende B kommt.

Diese flächig von dem Beckengurtabschnitt 14A beanspruchten Bereiche V1, W1, V2 definieren den kritischen Bereich K (Figur 2), in dem im Crashfall die höchsten Belastungen durch den Krafteintrag auftreten, wobei die Struktur durch die Öffnung 18 und die Formgebung der Blende B selbst, gerade in diesem Bereich etwas weniger Stabilität aufweist, wodurch die Gefahr besteht, dass die dreidimensionale Struktur der Blende B im Crashfall dem Krafteintrag nicht gewachsen ist. Jegliche Deformation der Blende B oder eine etwaige Rissbildung der Blende B oder dergleichen muss aber zuverlässig vermieden werden.

Die dazu notwendigen Maßnahmen werden erfindungsgemäß durch einen Blendenhalter H realisiert, der auf der im Zusammenbauzustand nicht sichtbaren Innenseite I der Blende B an der Blende B und im Einbauzustand an der Struktur des Fahrzeugsitzes 100 angeordnet ist.

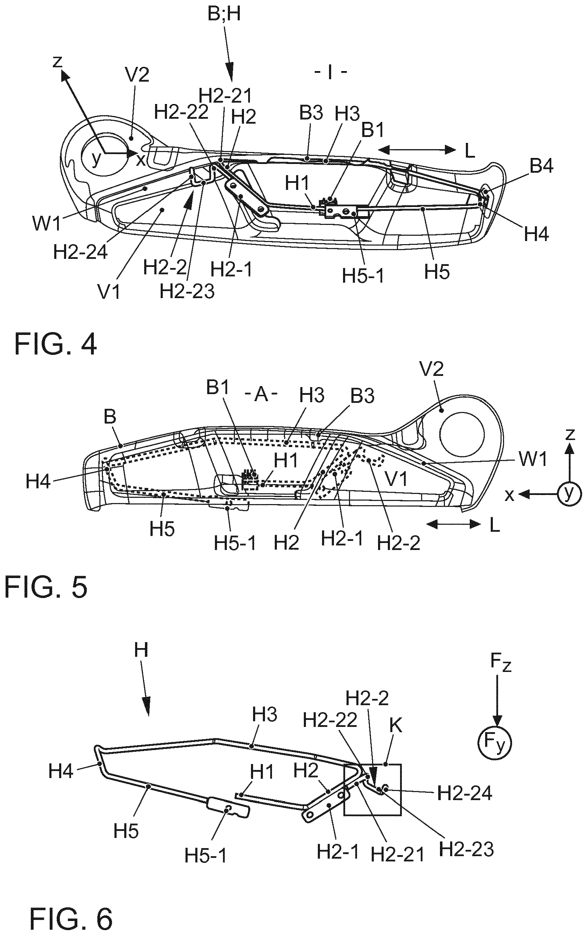

Die Figur 4 zeigt die Innenseite I und die Figur 5 eine Außenseite A des Blendenhalters H im Zusammenbauzustand, während die Figur 6 den Blendenhalter H allein in der Position analog in der in Figur 5 dargestellten Position zeigt.

Es wird empfohlen, die Figuren 4 bis 6 ebenfalls in einer Zusammenschau zu betrachten.

Der Blendenhalter H ist im Wesentlichen als dreidimensional geformter Drahtrahmen aus einem versteifenden Draht ausgebildet. An dem Drahtrahmen sind mehrere Vorsehungen realisiert, die der strukturseitigen Befestigung an dem Sitzteil 12 des Fahrzeugsitzes 100 und der strukturseitigen Stabilität der Blende B sowie der Positionierung der Blende B an der Struktur des Sitzteiles 12 des Fahrzeugsitzes 100 dienen.

Nachfolgend wird der Blendenhalter H und die Blende B im Einzelnen gemäß Figur 4 in Uhrzeigerrichtung beziehungsweise gemäß den Figuren 5 und 6 entgegen der Uhrzeigerrichtung umlaufend beschrieben.

Der Draht des Blendenhalters H weist ein freies Ende an einem ersten unteren Schenkel H1 auf. Zudem weist der Blendenhalter H ein erstes Halteelement H2-1 an einem ersten seitlichen Schenkel H2 auf, welches an dem zwischen dem ersten unteren Schenkel H1 und einem oberen Schenkel H3 des Drahtes des Drahtrahmens ausgebildeten Schenkel H2 angeordnet ist.

Ferner weist der Blendenhalter H einen am Draht des ersten seitlichen Schenkels H2 angeordneten Stützbügel H2-2 auf.

Außerdem umfasst der Blendenhalter H den oberen Schenkel H3 an den sich ein zweiter seitlicher Schenkel H4 anschließt. Ein zweiter unterer Schenkel H5 bildet ein freies Ende aus, an dem ein zweites Halteelement H5-1 angeordnet ist.

Im Zusammenbauzustand greift das freie Ende des ersten unteren Schenkels H1 in einen an der Innenseite I der Blende B angeordneten Clip und rastet in dem Clip ein. Die Rastverbindung zwischen Blende B und Blendenhalter H wird mit einem über die Rastverbindung gelegten Filmscharnier gesichert. Der Clip und das Filmscharnier sind gemeinsam mit dem Bezugszeichen B1 versehen.

Das erste Halteelement H2-1 des Blendenhalters H an dem ersten seitlichen Schenkel H2 weist Öffnungen auf, die über Befestigungsmittel eine erste Befestigung des Blendenhalters H an der Struktur des Sitzteiles12 des Fahrzeugsitzes 100 ermöglichen.

Der ebenfalls an dem ersten seitlichen Schenkel H2 angeordnete Stützbügel H2-2 des Blendenhalters H weist ein erstes Bügelelement H2-21 als Verbindungsglied auf, welches parallel zu dem ersten seitlichen Schenkels H2 angeordnet und mit dem ersten seitlichen Schenkels H2 fest verbunden ist.

In den Stützbügel H2-2 eingeleitete Kräfte, insbesondere aus der y-Richtung und der z-Richtung werden im Einbauzustand über das erste Bügelelement H2-21 in den ersten seitlichen Schenkel H2 eingeleitet, der sich über das erste Halteelement H2-1 an der Struktur des Sitzteil 12 des Fahrzeugsitzes 100 abstützt. Die Krafteinleitung in die angrenzende Struktur des Sitzteiles 12 erfolgt ausgehend vom Stützbügel H2-2 indirekt.

Das erste Bügelelement H2-21 geht in einen U-Bügel über, der die Bügelelemente H2-22, H2-23 und H2-24 umfasst.

Das zweite und vierte Bügelelement H2-22, H2-24 sind in y-Richtung quer zur Längsachse L des Blendenhalters H beziehungsweise der Blende B ausgerichtet.

Das dritte Bügelelement H2-23 ist quer zu y-Richtung und somit im Wesentlichen in Richtung der Längsachse L des Blendenhalters H beziehungsweise der Blende B in x-Richtung ausgerichtet.

Die Länge des zweiten und vierten Bügelelementes H2-22, H2-24 entspricht dem Abstand zwischen der Innenseite der Blende B und der Struktur des Sitzteiles 12 des Fahrzeugsitzes 100.

Das dritte Bügelelement H2-23 verbindet das zweite und vierte Bügelelement H2-22, H2-24 miteinander, wobei die Länge des dritten Bügelelementes H2-23 so ausgewählt ist, dass es zentral innerhalb des kritischen Bereiches K angeordnet ist und den kritischen Bereich K zumindest teilweise in x-Richtung überspannt. Die Wirkungsweise des derart ausgebildeten und zuvor beschriebenen, innerhalb der Blende B als Teil des Blendenhalters H ausgebildeten Stützbügels H2-2, wird nachfolgend noch detailliert erläutert.

Der obere Schenkel H3 des Blendenhalters H wird im Zusammenbauzustand in Hinterfassungen B3 der Blende B in y-Richtung und in z-Richtung geführt. Der obere Schenkel H3 greift in die auf der Innenseite I der Oberseite der Blende B vorgesehenen Hinterfassungen B3 ein.

Der zweite seitliche Schenkel H4 greift in ein an der Innenseite I der Blende B angeordneten Clip und rastet in dem Clip ein. Die Rastverbindung zwischen Blende B und Blendenhalter H wird mit einem über die Rastverbindung gelegten Filmscharnier gesichert. Der Clip und das Filmscharnier sind gemeinsam mit dem Bezugszeichen B4 versehen. Diese Rastverbindung zwischen Blende B und Blendenhalter H ist analog zu der Rastverbindung aus Clip und Filmscharnier B1 ausgebildet, wobei zusätzlich oberhalb der Rastverbindung aus Clip und Filmscharnier B4 auf der Innenseite I der Blende B stabilisierende Rippen angeordnet sind. Solche Rippen können auch im Bereich der Rastverbindung aus Clip und Filmscharnier B1 ausgebildet werden.

Der zweite seitliche Schenkel H4 des Blendenhalters H ist drahtseitig derart ausgerichtet, dass der Draht parallel zu der in im Wesentlichen x/z-Ebene verlaufenden Blende B angeordnet ist. Dadurch wird im Zusammenbauzustand durch die Rastverbindung aus Clip und Filmscharnier B4 des zweiten seitlichen Schenkels H4 des Blendenhalters H eine Positionierung der Blende B in x-Richtung und durch die Rippen eine Abstützung und Fixierung des Drahtes in z-Richtung des Drahtes im Bereich des zweiten seitlichen Schenkels H4 an der Blende B erreicht.

Der weitere untere Schenkel H5 bildet das zweite freie Ende mit dem zweiten Halteelement H5-1 aus. Das zweite Halteelement H5-1 des Blendenhalters H weist analog zu dem ersten Halteelement H2-1 Öffnungen auf, die im Einbauzustand über Befestigungsmittel eine zweite Befestigung des Blendenhalters H an der Struktur des Sitzteiles 12 des Fahrzeugsitzes 100 ermöglichen.

Das erste Halteelement H2-1 des Blendenhalters H an dem ersten seitlichen Schenkel H2 weist Öffnungen auf, die über Befestigungsmittel eine erste Befestigung des Blendenhalters H an der Struktur des Sitzteiles12 des Fahrzeugsitzes 100 ermöglichen.

Es versteht sich, dass der Blendenhalter H an jeder anderen nahe liegenden Struktur, insbesondere der Karosserie des Fahrzeuges oder dergleichen anordbar ist.

Die Wirkungsweise des im Zusammenbauzustand in der Blende B angeordneten und im Ausführungsbeispiel an der Struktur des Sitzteiles 12 des Fahrzeugsitzes 100 (Einbauzustand) über die Halteelemente H2-1 und H5-1 befestigten Blendenhalters H, wird nachfolgend für den etwaigen Crashfall noch detaillierter erläutert, wodurch die Vorteile der erfindungsgemäßen Lösung weiter verdeutlicht werden.

Im Crashfall kommt es durch den an der Blende B flächig angreifenden Beckengurtabschnitt 14A im vorne bereits definierten kritischen Bereich K, in dem ersten vertikalen Wandbereich V1 sowie zumindest teilweise in dem im Wesentlichen horizontalen Wandbereich W1 und gegebenenfalls noch in dem im Wesentlichen zweiten vertikalen Wandbereich V2 zu einem sehr hohen Krafteintrag.

Die auf die Blende B wirkenden Kraftkomponenten Fy und Fz der einwirkenden Crashkraft wirken in y-Richtung und in z-Richtung auf die Blende B, wie in Figur 6 symbolisch an dem kritischen Bereich K angetragen ist. Die Kraftkomponente Fy wirkt in Blickrichtung des Betrachters gesehen in die Blattebene hinein.

Die aus vertikaler Richtung auf die Blende B wirkende Kraftkomponente Fz wird durch den oberen Schenkel H3 aufgenommen und durch den ersten seitlichen Schenkel H2 in das strukturseitig fixierte Halteelement H2-1 und damit ausgehend vom oberen Schenkel H3 indirekt in die Struktur eingeleitet.

Darüber hinaus bildet der Stützbügel H2-2 insgesamt eine Stütze für den Wesentlichen horizontalen Wandbereich W1 der Blende B, da die Oberseite des u-förmigen Stützbügels H2-2 (H2-22 bis H2-24) im kritischen Bereich K ein flächiges Lager für die Blende B bildet.

Die aus vertikaler Richtung auf die Blende B wirkende Kraftkomponente Fz wird über das erste Bügelelement H2-21 ebenfalls in den ersten seitlichen Schenkel H2 und in das strukturseitig fixierte Halteelement H2-1 und damit ausgehend vom Stützbügel H2-2 indirekt in die Struktur eingeleitet.

Die aus horizontaler Richtung auf die Blende B wirkende Kraftkomponente Fy wird im kritischen Bereich K durch den Stützbügel H2-2 aufgenommen.

Das dritte Bügelelement H2-23 ist quer zur y-Richtung und somit im Wesentlichen in Richtung der Längsachse L des Blendenhalters H beziehungsweise der Blende B ausgerichtet. Das dritte Bügelelement H2-23 ist im Übergang zwischen dem vertikalen Wandbereich V1 sowie dem im Wesentlichen horizontalen Wandbereich W1 angeordnet.

Die Länge des dritten Bügelelementes H2-23 ist derart ausgewählt, dass die Kraftkomponente Fy im kritischen Bereich K zentral auf das dritte Bügelelement H2-23 einwirkt.

Insbesondere die im exponierten Übergangsbereich zwischen dem vertikalen Wandbereich V1 sowie dem im Wesentlichen horizontalen Wandbereich W1 wirkende Kraftkomponente Fy wird somit von dem dritten Bügelelement H2-23 aufgenommen und über das zweite und vierte Bügelelement H2-22 und H2-24 des Stützbügels H2-2 direkt in die Struktur eingeleitet.

Da die Länge des zweiten und vierten Bügelelementes H2-22, H2-24 dem Abstand zwischen der Innenseite der Blende B und der Struktur des Sitzteiles 12 des Fahrzeugsitzes 100 entspricht, wird die Kraftkomponente Fy sicher direkt in die angrenzende Struktur eingeleitet, da sich das freie Ende des vierten Bügelelementes H2-24 im Crashfall direkt an der angrenzenden Struktur des Sitzteiles 12 abstützt. Das zweite Bügelelement H2-22 stützt sich mit seinem strukturseitigen unfreien Ende bereits im Normallfall direkt an der angrenzenden Struktur ab.

Es ist vorgesehen, dass das freie Ende des vierten Bügelelementes H2-24 einen geringen Abstand zur Struktur des Sitzteiles 12 aufweist, damit das freie Ende des vierten Bügelelementes H2-24 des Stützbügels H2-2 des Blendenhalters H im Normalfall nicht an die Struktur des Sitzteiles 12 anstößt und eventuell ein unerwünschtes Klappern erzeugt. Als Abstand sind beispielsweise 4 mm vorgesehen. Erst im möglichen Crashfall kommt es dann zu einer Veränderung des Radius zwischen dem zweiten Bügelelement H2-22 und dem dritten Bügelelement H2-23. Es kommt dort bei Einwirken der Crashkraft zu einer Verformung und zur Veränderung des Radius, so dass das freie Ende des vierten Bügelelementes H2-24 des Stützbügels H2-2 nur im Crashfall Kontakt zur Sitzstruktur 12 bekommt und damit seine Wirkung voll entfaltet.

Darüber hinaus ist das zweite Bügelelement H2-22 mit seinem unfreien Ende mit dem ersten Bügelelement H2-21 verbunden, wodurch insbesondere die Kraftkomponente Fy auch über das mit dem ersten seitlichen Schenkel H2 verbundene erste Bügelelement H2-21, die auf das zweite Bügelelement H2-22 wirkende Kraft aus y-Richtung über das strukturseitig fixierte erste Halteelement H2-1 ausgehend von dem zweite Bügelelement H2-22 des Stützbügels H2-2 indirekt in die angrenzende Struktur einleitet.

Es wird deutlich, dass der sich im Einbauzustand befindende Blendenhalter H im Zusammenbauzustand mit der Blende B bereits durch seine Ausgestaltung und durch seine Verbindung zur Blende B im etwaigen Crashfall in der Lage ist, eine Crashkraft aufzunehmen. In dem kritischen Bereich K wird für den etwaigen Crashfall der Stützbügel H2-21 an dem Blendenhalter H angeordnet, wodurch auch der kritische Bereich K der Blende B im Crashfall unkritisch ist, da die Materialstabilität und die Formstabilität der Blende B durch den Blendenhalter H mit dem integrierten Stützbügel H2-2 gesichert ist.

### Bezugszeichenliste

- 100: Fahrzeugsitz
- 10: Rückenlehne
- 12: Sitzteil
- 14: Sicherheitsgurt
- 14A: Beckengurtbereich
- 14B: Befestigungselement
- 14C: Gurtschloss
- 16: Höhenverstellhebel
- 18: Öffnung
- B: Blende
- B1: Clip/Filmscharnier
- B3: Hinterfassungen
- B4: Clip/ Filmscharnier
- H: Blendenhalter
- H1: erster unterer Schenkel
- H2: erster seitlicher Schenkel
- H2-1: erstes Halteelement
- H2-2: Stützbügel
- H2-21: erstes Bügelelement
- H2-22: zweites Bügelelement
- H2-23: drittes Bügelelement
- H2-24: viertes Bügelelement
- H3: oberer Schenkel
- H4: zweiter seitlicher Schenkel
- H5: zweiter unterer Schenkel
- H5-1: zweites Halteelement
- K: kritischer Bereich
- V1: ersten vertikalen Wandbereich
- V2: zweiten vertikalen Wandbereich
- W1: horizontalen Wandbereich
- I: Innenseite der Blende
- A: Außenseite der Blende
- L: Längsachse
- K: kritischer Bereich
- x: Richtung in/entgegen der Fahrtrichtung eines Fahrzeugs
- y: Richtung in der Horizontalen quer zur x-Richtung
- z: Richtung in der Vertikalen quer zur x-Richtung
- Fy: Kraftkomponente
- Fz: Kraftkomponente

## Patentansprüche

1. Blendenhalter (H) aus mindestens einem Draht, der mindestens ein Element (H2-1; H5-1) zur Befestigung des Blendenhalters (H) an einer an den Blendenhalter (H) angrenzenden festen Struktur und mindestens ein Element (H1; H3; H4) zur Befestigung des Blendenhalters (H) an einer Blende (B) aufweist, wobei der Draht einen Stützbügel (H2-2) ausbildet, der im Zusammenbauzustand von Blendenhalter (H) und Blende (B) in einem kritischen Bereich (K) der Blende (B) angeordnet ist, in dem in einem etwaigen Crashfall eine hohe Crashkraft auf die Blende (B) einwirkt, **dadurch gekennzeichnet, dass** der kritische Bereich (K) der Blende (B) eine in die Blende (B) integrierte Öffnung (18) aufweist, aus der im Einbauzustand der Blende (B) ein Höhenverstellhebel (16) heraus steht, für dessen Mechanik in der Blende (B) ein Bauraum vorgehalten ist.

2. Blendenhalter (H) nach Anspruch 1, **dadurch gekennzeichnet, dass** der Draht des Blendenhalters (H) zu einem Drahtrahmen geformt ist, der mindestens einen Schenkel (H1; H2; H3; H4; H5) umfasst, wobei der mindestens eine Schenkel (H2) im Zusammenbauzustand von Blendenhalter (H) und Blende (B) nahe des kritischen Bereiches (K) der Blende (B) angeordnet ist, oder zumindest teilweise in den kritischen Bereich (K) der Blende (B) hineinragt, wobei an dem mindestens einen Schenkel (H2) der Stützbügel (H2-2) angeformt oder angeordnet ist, der von dem mindestens einen Schenkel (H2) abgeht und im Zusammenbauzustand in einem zentralen Bereich des kritischen Bereiches (K) angeordnet ist.

3. Blendenhalter (H) nach Anspruch 1 oder 2, **dadurch gekennzeichnet, dass** der Stützbügel (H2-2) mindestens ein Bügelelement (H2-22; H2-23; H2-24) umfasst, welches einerseits die Blende (B) abstützt und eine Crashkraft im kritischen Bereiches (K) aufnimmt, und andererseits die Blende (B) an der angrenzenden Struktur abstützt, so dass die Crashkraft in die angrenzende Struktur eingeleitet wird.

4. Blendenhalter (H) nach Anspruch 2 und 3, **dadurch gekennzeichnet, dass** das mindestens eine Bügelelement (H2-22; H2-23; H2-24) des Stützbügels (H2-2) die Crashkraft über den mindestens einen Schenkel (H2) indirekt in die angrenzende Struktur einleitet, da der mindestens eine Schenkel (H2) ein Halteelement (H2-1) aufweist, welches im Einbauzustand des mit der Blende (B) verbundenen Blendenhalters (H) fest mit der Struktur verbunden ist.

5. Blendenhalter (H) nach Anspruch 2 und 3, **dadurch gekennzeichnet, dass** das mindestens eine Bügelelement (H2-22; H2-24) des Stützbügels (H2-2) die Crashkraft direkt in die angrenzende Struktur einleitet, da sich das mindestens eine Bügelelement (H2-22; H2-24) im Einbauzustand des mit der Blende (B) verbundenen Blendenhalters (H) einerseits an einer Innenseite (I) der Blende und andererseits direkt an der angrenzenden Struktur abstützt.

6. Blendenhalter (H) nach Anspruch 4 und 5, **dadurch gekennzeichnet, dass** das mindestens eine Bügelelement (H2-22; H2-23; H2-24) des Stützbügels (H2-2) die Crashkraft in einer Kombination der Ansprüche 4 und 5 indirekt und direkt in die angrenzende Struktur einleitet.

7. Blendenhalter (H) nach Anspruch 3, **dadurch gekennzeichnet, dass** der Stützbügel (H2-2) u-förmig ausgebildet ist, wobei zwei Bügelelemente (H2-22; H2-24) des "U" quer zu einer Längsachse (L), des sich im Zusammenbauzustand von Blendenhalter (H) und Blende (B) befindenden Blendenhalters (H) angeordnet sind, und ein die zwei Bügelelemente (H2-22; H2-24) verbindendes Bügelelement (H2-23) in Richtung der Längsachse (L), des sich im Zusammenbauzustand von Blendenhalter (H) und Blende (B) befindenden Blendenhalters (H) angeordnet ist.

8. Blendenhalter (H) nach Anspruch 2, **dadurch gekennzeichnet, dass** die Bügelelemente (H2-22; H2-23; H2-24) über ein weiteres Bügelelement (H2-21) an den mindestens einen Schenkel (H2) angeformt oder angeordnet sind.

9. Blende (B), umfassend einen Blendenhalter (H) nach mindestens einem der Ansprüche 1 bis 8.

10. Fahrzeugsitz (100) mit einem in eine Blende (B) integrierten Blendenhalter (H) nach mindestens einem der Ansprüche 1 bis 8.

## Claims

1. Panel holder (H) made of at least one wire and having at least one element (H2-1; H5-1) for fastening the panel holder (H) on a fixed structure adjacent to the panel holder (H), and having at least one element (H1; H3; H4) for fastening the panel holder (H) on a panel (B), wherein the wire forms a supporting bracket (H2-2) which, with the panel holder (H) and panel (B) in the assembled state, is arranged in a critical region (K) of the panel (B), the panel (B) being subjected to a high crash-induced force in said critical region in the event of a crash, **characterized in that** the critical region (K) of the panel (B) has an opening (18) which is integrated in the panel (B) and from which, with the panel (B) in the installed state, projects a height-adjustment lever (16), an amount of installation space being provided in the panel (B) for the mechanism of said lever.

2. Panel holder (H) according to Claim 1, **characterized in that** the wire of the panel holder (H) is formed into a wire frame which comprises at least one limb (H1; H2; H3; H4; H5), wherein, with the panel holder (H) and panel (B) in the assembled state, the at least one limb (H2) is arranged in the vicinity of the critical region (K) of the panel (B), or projects at least to some extent into the critical region (K) of the panel (B), wherein the supporting bracket (H2-2) is formed or arranged on the at least one limb (H2), said supporting bracket extending from the at least one limb (H2) and, in the assembled state, being arranged centrally in the critical region (K).

3. Panel holder (H) according to Claim 1 or 2, **characterized in that** the supporting bracket (H2-2) comprises at least one bracket element (H2-22; H2-23; H2-24) which, on the one hand, supports the panel (B) and absorbs a crash-induced force in the critical region (K) and, on the other hand, supports the panel (B) on the adjacent structure, the crash-induced force thus being introduced into the adjacent structure.

4. Panel holder (H) according to Claims 2 and 3, **characterized in that** the at least one bracket element (H2-22; H2-23; H2-24) of the supporting bracket (H2-2) introduces the crash-induced force into the adjacent structure indirectly via the at least one limb (H2) since the at least one limb (H2) has a retaining element (H2-1) which, in the installed state of the panel holder (H) connected to the panel (B), is fixed to the structure.

5. Panel holder (H) according to Claims 2 and 3, **characterized in that** the at least one bracket element (H2-22; H2-24) of the supporting bracket (H2-2) introduces the crash-induced force into the adjacent structure directly since, in the installed state of the panel holder (H) connected to the panel (B), the at least one bracket element (H2-22; H2-24) is supported, on the one hand, on an inner side (I) of the panel and, on the other hand, directly on the adjacent structure.

6. Panel holder (H) according to Claims 4 and 5, **characterized in that** the at least one bracket element (H2-22; H2-23; H2-24) of the supporting bracket (H2-2) introduces the crash-induced force into the adjacent structure, in a combination of Claims 4 and 5, indirectly and directly.

7. Panel holder (H) according to Claim 3, **characterized in that** the supporting bracket (H2-2) is of u-shaped design, wherein two bracket elements (H2-22; H2-24) of the "U" are arranged transversely to a longitudinal axis (L) of the panel holder (H) in the assembled state of the panel holder (H) and panel (B), and a bracket element (H2-23) which connects the two bracket elements (H2-22; H2-24) is arranged in the direction of the longitudinal axis (L) of the panel holder (H) in the assembled state of the panel holder (H) and panel (B).

8. Panel holder (H) according to Claim 2, **characterized in that** the bracket elements (H2-22; H2-23; H2-24) are formed or arranged on the at least one limb (H2) via a further bracket element (H2-21).

9. Panel (B) comprising a panel holder (H) according to at least one of Claims 1 to 8.

10. Vehicle seat (100) having a panel holder (H) according to at least one of Claims 1 to 8 integrated in a panel (B).

## Revendications

1. Dispositif de retenue de cache (H) constitué d'au moins un fil qui présente au moins un élément (H2-1 ; H5-1) pour la fixation du dispositif de retenue de cache (H) sur une structure fixe adjacente au dispositif de retenue de cache (H) et au moins un élément (H1 ; H3 ; H4) pour fixer le dispositif de retenue de cache (H) à un cache (B), le fils constituant un étrier de support (H2-2) qui est disposé dans l'état assemblé du dispositif de retenue de cache (H) et du cache (B) dans une zone critique (K) du cache (B) dans laquelle, en cas de collision éventuelle, une force de collision élevée s'exerce sur le cache (B), **caractérisé en ce que** la zone critique (K) du cache (B) présente une ouverture (18) intégrée dans le cache (B), de laquelle sort, dans l'état installé du cache (B), un levier de réglage en hauteur (16), pour le mécanisme duquel un espace est réservé dans le cache (B).

2. Dispositif de retenue de cache (H) selon la revendication 1, **caractérisé en ce que** le fil du dispositif de retenue de cache (H) est formé pour obtenir un cadre en fil qui comprend au moins une branche (H1 ; H2 ; H3 ; H4 ; H5), l'au moins une branche (H2), dans l'état assemblé du dispositif de retenue de cache (H) et du cache (B), étant disposée à proximité de la zone critique (K) du cache (B), ou pénétrant au moins en partie dans la zone critique (K) du cache (B), l'étrier de support (H2-2) étant façonné ou disposé au niveau de l'au moins une branche (H2), lequel part de l'au moins une branche (H2), et dans l'état assemblé, est disposé dans une zone centrale de la zone critique (K).

3. Dispositif de retenue de cache (H) selon la revendication 1 ou 2, **caractérisé en ce que** l'étrier de support (H2-2) comprend au moins un élément d'étrier (H2-22 ; H2-23 ; H2-24) qui, d'une part, supporte le cache (B) et reçoit une force de collision dans la zone critique (K), et d'autre part, supporte le cache (B) au niveau de la structure adjacente de telle sorte que la force de collision soit introduite dans la structure adjacente.

4. Dispositif de retenue de cache (H) selon les revendications 2 et 3, **caractérisé en ce que** l'au moins un élément d'étrier (H2-22 ; H2-23 ; H2-24) de l'étrier de support (H2-2) introduit la force de collision par le biais de l'au moins une branche (H2) indirectement dans la structure adjacente, car l'au moins une branche (H2) présente un élément de retenue (H2-1) qui, dans l'état installé du dispositif de retenue de cache (H) connecté au cache (B), est connecté fixement à la structure.

5. Dispositif de retenue de cache (H) selon les revendications 2 et 3, **caractérisé en ce que** l'au moins un élément d'étrier (H2-22 ; H2-24) de l'étrier de support (H2-2) introduit la force de collision directement dans la structure adjacente, car l'au moins un élément d'étrier (H2-22 ; H2-24), dans l'état installé du dispositif de retenue de cache (H) connecté au cache (B), s'appuie d'une part contre un côté intérieur (I) du cache et d'autre part directement contre la structure adjacente.

6. Dispositif de retenue de cache (H) selon les revendications 4 et 5, **caractérisé en ce que** l'au moins un élément d'étrier (H2-22 ; H2-23 ; H2-24) de l'étrier de support (H2-2) introduit la force de collision dans une combinaison des revendications 4 et 5 indirectement et directement dans la structure adjacente.

7. Dispositif de retenue de cache (H) selon la revendication 3, **caractérisé en ce que** l'étrier de support (H2-2) est réalisé en forme de u, deux éléments d'étrier (H2-22 ; H2-24) du U étant disposés transversalement par rapport à un axe longitudinal (L) du dispositif de retenue de cache (H) se trouvant dans l'état assemblé du dispositif de retenue de cache (H) et du cache (B), et un élément d'étrier (H2-23) reliant les deux éléments d'étrier (H2-22 ; H2-24) dans la direction de l'axe longitudinal (L) du dispositif de retenue de cache (H) se trouvant dans l'état assemblé du dispositif de retenue de cache (H) et du cache (B) .

8. Dispositif de retenue de cache (H) selon la revendication 2, **caractérisé en ce que** les éléments d'étrier (H2-22 ; H2-23 ; H2-24) sont façonnés ou disposés par le biais d'un élément d'étrier supplémentaire (H2-21) sur l'au moins une branche (H2).

9. Cache (B) comprenant un dispositif de retenue de cache (H) selon au moins l'une quelconque des revendications 1 à 8.

10. Siège de véhicule (100) comprenant un dispositif de retenue de cache (H) selon au moins l'une quelconque des revendications 1 à 8, intégré dans un cache (B).
